# EUROPÄISCHE PATENTANMELDUNG

(11) **EP 1 820 825 A1**
(43) Veröffentlichungstag der Anmeldung: **22.08.2007**
(21) Anmeldenummer: 07002688.5
(22) Anmeldetag: 08.02.2007
(51) Int. Cl.: C08L 83/06, C09D 183/04

(54) **Verfahren zur Herstellung von siloxanhaltigen Trennbeschichtungen**

(30) Priorität: 21.02.2006 DE 102006008387
(71) Anmelder: Goldschmidt GmbH, 45127 Essen (DE)
(72) Erfinder: Cavaleiro, Pedro, Dr., 41749 Viersen (DE); Döhler, Hardi, 40221 Düsseldorf (DE); Ferenz, Michael, Dr., 45147 Essen (DE); Hamann, Winfried, Dr., 45356 Essen (DE); Silber, Stefan, Dr., 47804 Krefeld (DE); Tomuschat, Philipp, Dr., 45127 Essen (DE); Venzmer, Joachim, Dr., 45239 Essen (DE)

(57) **Zusammenfassung**

Gegenstand der Erfindung ist ein Verfahren zur Herstellung von siloxanhaltigen Trennbeschichtungen, welches dadurch gekennzeichnet ist, dass eine siloxanhaltige Beschichtungsmasse durch Bestrahlung mit Mikrowellen ausgehärtet wird.

## Beschreibung

Die vorliegende Erfindung beschreibt ein Verfahren zur Herstellung von siloxanhaltigen Trennbeschichtungen, welches dadurch gekennzeichnet ist, dass eine siloxanhaltige Beschichtungsmasse durch Bestrahlung mit Mikrowellen ausgehärtet wird.

### Verwendung von siloxanhaltigen Beschichtungsmassen

Siloxanhaltige Beschichtungsmassen werden in größerem Umfang zur Beschichtung von flächigen Materialien verwendet, um die Adhäsionsneigung von adhärierenden Produkten gegenüber diesen Oberflächen zu verringern.

Siloxanhaltige Beschichtungsmassen werden zum Beispiel zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Haftung der Klebeetiketten auf den Trägerfolien muss so hoch sein, dass bei der maschinellen Applikation von Etiketten beim Lauf über Umlenkwalzen kein vorzeitiges Ablösen der Etiketten erfolgt. Andererseits müssen jedoch die Etiketten von der beschichteten Trägerfolie abziehbar sein, ohne dass ihre Klebkraft für die spätere Verwendung wesentlich beeinträchtigt wird.

Siloxanhaltige Trennbeschichtungen werden auch zur Herstellung von Klebebändern eingesetzt, um zum Beispiel ein kontrolliertes Abrollverhalten einzustellen. Weitere Anwendungsmöglichkeiten von Substraten mit abhäsiven Eigenschaften sind Verpackungspapiere und -folien, die insbesondere zur Verpackung von klebrigen Gütern dienen. Derartige Produkte werden beispielsweise zum Verpacken von Lebensmitteln, Konsumgütern, wie z.B. Damenbinden, oder zum Verpacken technischer Produkte, wie z.B. Bitumen, verwendet.

Eine weitere Anwendung von siloxanhaltigen Beschichtungsmassen besteht in der Herstellung von Haftverschlüssen, wie z.B. bei den so genannten Höschenwindeln. Ist die Abhäsivität zu hoch, bleibt die Windel nicht zuverlässig geschlossen. Ist die Abhäsivität zu niedrig, lässt sich der Verschluss nicht mehr ohne Zerreißen der Windel öffnen.

### Stand der Technik

Zur Herstellung von siloxanhaltigen Trennbeschichtungen werden nach dem Stand der Technik reaktive Siloxane eingesetzt, welche durch Temperatureinfluss, mittels ultravioletter Strahlung (UV) oder Elektronenstrahlung vernetzt werden. Im allgemeinen wird ein geeigneter Katalysator oder Initiator zugesetzt, der durch Temperatureinfluss, UV- oder Elektronenstrahlung aktiviert wird und so die chemische Reaktion, die zur Aushärtung führt, startet.

Thermisch härtbare siloxanhaltige Beschichtungsmassen werden zahlreich in der Patentliteratur beschrieben. So sind vernetzbare Zusammensetzungen, die alkenylfunktionelle Organosiloxane, Methylhydrogenpolysiloxane sowie einen geeigneten Katalysator enthalten aus US 3,445,450 bekannt.Des weiteren werden in US 4,476,166, US 4,504,645, US 4,609,574 und US 5,145,932 weitere siloxanhaltige Beschichtungsmassen zur Herstellung von Klebstoff abweisenden Überzügen beschrieben. Stein et al. (J. of Applied Polymer Sci. 1993, 47, 2257.) untersuchte die Beschaffenheit des nach Aushärtung erhaltenen Netzwerkes verschiedener Zusammensetzungen aus Vinylsiloxan, Hydrogensiloxan, Platinkatalysator und Inhibitor.

Seit den achtziger Jahren sind auch strahlenhärtende siloxanhaltige Beschichtungsmassen im Markt bekannt. Ein System, bestehend aus epoxyhaltigen Siloxanen, härtet unter UV-Strahlung nach einem kationischen Härtungsmechanismus aus. Dieses System wird u.a. in den Patentschriften US 4,421,904; US 4,547,431; US 4,952,657; US 5,217,805; US 5,279,860; US 5,340,898; US 5,360,833; US 5,650,453; US 5,866,261 und US 5,973,020 beschrieben.

Ein weiteres System härtet nach einem freien radikalischen Polymerisationsmechanismus nach Bestrahlung mit UV- oder Elektronenstrahlen aus. Solche Systeme sind z.B. in den Patentschriften US 4,201,808, US 4,568,566, US 4,678,846, US 5,494,979, US 5,510,190, US 5,552,506, US 5,804,301, US 5,891,530 und US 5,977,282 beschrieben. In Systemen, die nach einem freien radikalischen Mechanismus aushärten, sind die polymerisierbaren Gruppen typischerweise Acrylsäureestergruppen.

Herstellung abhäsiver Beschichtungen

Zur Herstellung abhäsiver Beschichtungen wird üblicherweise eine Mischung aus mehreren Organosiliciumverbindungen auf flächige Träger aus Kunststoff, Metall oder Papier aufgebracht und bahnförmig von Rolle zu Rolle bei hohen Anlagengeschwindigkeiten, von mehreren hundert Metern pro Minute, je nach System durch einen Ofen, eine Elektronenstrahlanlage oder eine UV-Anlage geführt und gehärtet.

So sind zum Beispiel thermisch härtende Trennbeschichtungen häufig Mehrkomponentensysteme, welche typischerweise aus folgenden Komponenten bestehen:
a) Einem linearen oder verzweigten Dimethylpolysiloxan, welches aus ca. 80 - 200 Dimethylpolysiloxan-Einheiten besteht und an den Kettenenden mit Vinyldimethylsiloxy-Einheiten abgestoppt ist. Typische Vertreter sind z.B. lösungsmittelfreies, additionsvernetzendes Siliconöl mit endständigen Vinylgruppen, wie DEHESIVE^{®} 921 oder 610, beide kommerziell erhältlich bei Wacker-Chemie GmbH.
b) Einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H, wie die Vernetzer V24, V90 oder V06, welche bei Wacker-Chemie GmbH (München) kommerziell erhältlich sind.
c) Einem Silicon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind z.B. die Trennkraftregler CRA^{®} 17 oder CRA^{®} 42, kommerziell erhältlich bei Wacker-Chemie GmbH (München).
d) Einem siliconlöslichen Platinkatalysator, wie z.B. einem Platin-divinyltetramethyldisiloxan-Komplex, welcher üblicherweise als Karstedt-Komplex bezeichnet wird und beispielsweise unter der Bezeichnung Katalysator OL bei Wacker-Chemie GmbH (München) kommerziell erhältlich ist.

Des Weiteren gibt es eine Reihe verschiedener Additive, die bestimmte Eigenschaften von Siloxantrennsystemen beeinflussen, so dass zum Beispiel eine verbesserte Haftung zum Untergrund erreicht wird. Zudem ist es häufig wünschenswert, die Trennbeschichtung zu mattieren. Dazu werden unter anderem Partikel in die Beschichtungsmasse eingearbeitet, wie zum Beispiel Kieselsäuren. Auch werden Antimisting-Additive eingesetzt, die die Siloxansprühnebelbildung auf ein Minimum reduzieren. Weitere typische Zusatzstoffe sind Farbstoffe, Pigmente sowie andere Füllstoffe.

Auch radikalisch härtbare Beschichtungsmassen bestehen zumeist aus mehreren Komponenten. Laut Stand der Technik werden Mischungen von mehreren (meth)acrylierten Polysiloxanen mit unterschiedlichen Kettenlängen und/oder Modifizierungsarten verwendet (US 6,548,568, 6,268,404, 6548568, Goldschmidt Veröffentlichung "TEGO^{®} RC Silicones, Application Guide", Goldschmidt Produktdatenblätter zu den Produkten TEGO^{®} RC 902, RC 726, RC 711, RC 708, RC 709, RC 715, RC 706). Ein niedrig modifiziertes, hochmolekulares Siliconacrylat ist dabei hauptsächlich für die Trenneigenschaften verantwortlich, und hoch modifizierte Siliconacrylate sorgen für eine gute Haftung zum Substrat. Weitere Bestandteile sind häufig Photoinitiatoren, welche die Radikalreaktion starten, sobald die Beschichtungsmasse mit UV-Licht bestrahlt wird. Darüber hinaus können zu einem oder einer Mischung von mehreren (meth)acrylierten Polysiloxanen eine oder mehrere organische (meth)acrylierte Verbindungen z.B. als Haftkomponente oder Reaktivverdünner zugesetzt werden, sowie Partikel, wie zum Beispiel Kieselsäuren, die die Trennbeschichtung mattieren.

Auch kationisch vernetzende Systeme sind häufig Multikomponentensysteme. Zumeist werden Mischungen verschiedener Siloxane eingesetzt, die mit Vinylcyclohexenoxid modifiziert sind. Bei den hier eingesetzten Photoinitiatoren handelt es sich zumeist um Iodoniumsalze. Weitere Bestandteile können organische Vinylether sein, die beispielsweise als Verdünner oder als Haftungsadditiv dienen, sowie Füllstoffe, die zum Beispiel die Trennbeschichtung mattieren.

Die verschiedenen Verfahren zur Herstellung von Trennbeschichtungen besitzen individuelle Vor- und Nachteile. So kommen zum Beispiel bei thermisch initiierten additionsvernetzenden Beschichtungsmassen Platin-Katalysatoren zum Einsatz, die üblicherweise zur Aktivierung der Reaktion mindestens eine Temperaturerhöhung auf 70 - 150 °C für einige Sekunden benötigen. Dadurch ist die Auswahl der Substrate auf temperaturunempfindliche Materialien beschränkt. Daher wäre es wünschenswert, die thermische Initiierung möglichst schonend, bei geringer Temperaturbelastung des Substrates, durchzuführen, um so die Anwendungsbreite zu vergrößern.

Die Aushärtung von kationisch oder radikalisch härtenden Beschichtungsmassen mit Elektronenstrahlen erfordert relativ teure Anlagen. Deshalb werden für die Aushärtung derartiger Systeme häufig UV-Anlagen bevorzugt. UV-Anlagen besitzen jedoch den Nachteil, dass auch Infrarot-Strahlung erzeugt wird, die aufwendig durch Wasser- oder Luftkühlung abgeführt werden muss. Zudem enthält die Abluft nennenswerte Mengen Ozon und die eingesetzten Mitteldruck-Quecksilber-Dampflampen stellen ein Entsorgungsproblem dar. Zusätzlich sind die anwendungsfertigen Beschichtungsmassen durch die Anwesenheit des Photoinitiators sensibel gegenüber Sonnenlicht, so dass deren Lagerfähigkeit einschränkt ist.

### Mikrowellen

Mikrowellen sind elektromagnetische Wellen, die im Vergleich zu UV-Strahlen deutlich energieärmer sind. Werden Materialien mit Mikrowellen bestrahlt, so werden diese auf Grund der entsprechenden Eigenschaften dieser Materialien in Wärmeenergie umgewandelt. Diese Umwandlung ist material-, temperatur- und frequenzabhängig. Der entscheidende Faktor für die Effektivität der Energieumwandlung ist der Imaginärteil des Dielektrizitätskoeffizienten. Besonders geeignet für die Absorption von Mikrowellen sind daher insbesondere stark polare Substanzen. So ist zum Beispiel das Wassermolekül aufgrund seines Winkels zwischen den Atomen so polar, dass eine Erwärmung durch Mikrowellen leicht möglich ist. Das polare Molekül wird hierbei durch das hochfrequente Wechselfeld in Rotation versetzt und somit die elektromagnetische Energie in Wärme umgewandelt.

Der Mikrowellentechnik stehen zur Erwärmung im Wesentlichen drei Frequenzen zur Verfügung, die, je nach länderspezifischen Regeln, auch von den angegebenen Werten etwas abweichen können. Die höchste Frequenz ist 28 bzw. 30 GHz. Ein industrieller und kostengünstiger Einsatz dieser Frequenz in größerem Maßstab ist derzeit noch nicht in Sicht. Die niedrigere Frequenz von 915 MHz unterliegt einem gewissen technischen Aufwand, der nur für bestimmte Fälle einen Einsatz rechtfertigt. Die Frequenz, die am preiswertesten technisch umzusetzen ist, liegt bei 2,45 GHz. Diese wird jetzt schon weltweit in hoher Stückzahl in Form von Haushaltsmikrowellengeräten genutzt.

Mittlerweile gibt es auch Geräte, die geeignet sind, große Flächen mit Mikrowellen zu bestrahlen. So werden Mikrowellen zum Beispiel zur Trocknung von Holz- und Gebäuden eingesetzt. Bauteile können durch Mikrowellen in kürzester Zeit erwärmt werden, wobei die vorhandene Feuchtigkeit verdampft.

### Polymerisationen mit Mikrowellen

Es gibt eine Reihe von literaturbekannten chemischen Reaktionen, die durch Bestrahlung von Mikrowellen gefördert werden. Dazu gehören auch Polymerisationen. So werden zum Beispiel die Bildung von Polyamiden (Imai, Nemoto, Watanabe, Kakimoto, Polym. J. 1996, 28, 256.), Polyimiden (Imai, ACS Symp. Ser. 1996, 624, 421.), Polyestern (Keki, Bodnar, Deak, Zsuga, Macromol. Rapid Commun. 2001, 22, 1063.) oder Polyacrylaten (Teffal, Gourdenne, Eur. Polym. J. 1983, 19, 543.) beschrieben.

Bei den aufgeführten Systemen handelt es sich stets um organische Systeme, bei denen überwiegend Substrate mit einer hohen Polarität zum Einsatz kommen, da sich diese gut durch Mikrowellen anregen lassen. Siloxanhaltige Beschichtungsmassen, die zur Herstellung von Trennbeschichtungen eingesetzt werden, zeichnen sich demgegenüber, aufgrund ihres hohen Siloxan-Gehaltes, durch einen unpolaren Charakter aus. Erst dieser verleiht der Trennbeschichtung ihre abhäsive Wirkung.

### Beschreibung der Erfindung

Überraschenderweise wurde nun gefunden, dass Mikrowellen auch zur Herstellung von siloxanhaltigen Trennbeschichtungen geeignet sind, indem die siloxanhaltigen Beschichtungsmassen durch Bestrahlung mit Mikrowellen ausgehärtet werden. Dies gilt sowohl für Beschichtungsmassen, die aufgrund einer thermisch initiierten bzw. katalysierten Additionsreaktion aushärten, als auch für solche, die mit einer radikalischen Polymerisation oder einer kationischen Polymerisation aushärten.

Da jedes anregbare Molekül die Mikrowellenstrahlung in Wärme umsetzt und Mikrowellen eine hohe Eindringtiefe besitzen, wird das gesamte Volumen der Beschichtungsmasse aufgeheizt. Dies ist ein wesentlicher Vorteil gegenüber der konventionellen Erwärmung, bei der die Wärme nur über die Oberfläche des Materials in den Körper eindringen kann und somit eine gewisse Wärmeleitfähigkeit vorhanden sein muss, um eine vernünftige Aufheizung zu erhalten. Dies bedingt, dass auch stets das Substrat mit erwärmt wird und so einer Temperaturbelastung unterliegt. Bei der mikrowelleninduzierten Härtung kann die Beschichtungsmasse gezielt erwärmt werden, ohne das Substrat wesentlich aufzuheizen.

Gegenstand dieser Erfindung ist daher ein Verfahren zur Herstellung von siloxanhaltigen Trennbeschichtungen, welches dadurch gekennzeichnet ist, dass eine siloxanhaltige Beschichtungsmasse durch Bestrahlung mit Mikrowellen ausgehärtet wird.

Die erfindungsgemäß verwendbaren, siloxanhaltigen Beschichtungsmassen enthalten in hohem Maße Siloxane, welche reaktive Gruppen enthalten, die nach mindestens einem der oben angegebenen Mechanismen aushärtbar sind.

Die in der oben angeführten Literatur beschriebenen Trennbeschichtungen und die jeweiligen Katalysatoren bzw. Initiatoren können auch erfindungsgemäß verwendet werden.

Der Inhalt der oben angeführten Literatur und Patentliteratur zur chemischen Charakterisierung der reaktiven Gruppen enthaltenden, siloxanhaltigen Beschichtungsmassen sowie der mitverwendbaren Initiatoren bzw. Katalysatoren wird daher hiermit als Referenz eingeführt und gilt als Teil des Offenbarungsgehaltes der vorliegenden Anmeldung.

Von Vorteil kann es sein, Additive in die Beschichtungsmasse einzubringen, die leicht durch Mikrowellen erwärmt werden können. Dies können Partikel oder Mischungen verschiedener Partikel sein. Geeignete Partikel sind insbesondere anorganische Feststoffteilchen mit polaren Oberflächen. Deren Teilchengröße ist variabel. Geeignet sind insbesondere Teilchen mit einer mittleren Größe von bis zu 5 µm. Derartige anorganische Partikel können aus Metall- oder Halbmetallverbindungen bestehen. Beispiele sind (gegebenenfalls hydratisierte) Oxide, Phosphate, Stannate, Spinelle, Ferrite oder Mischoxide. Für die Verwendung in nicht-mattierten Trennbeschichtungen, die üblicherweise eine Dicke von etwa 0,5 bis 2 µm besitzen, sind insbesondere nanoskalige Partikel vorteilhaft. Besonders geeignet sind Kieselsäuren, hier insbesondere nanoskalige Kieselsäuren, die sich durch eine polare Oberfläche auszeichnen.

Weiterhin können polare organische Verbindungen in die Beschichtungsmasse eingebracht werden. So eignen sich zum Beispiel Polyether oder Polyethersiloxane zur Beschleunigung der Aushärtungsreaktion.

Weiterhin geeignet sind ionische Substanzen, insbesondere ionische Flüssigkeiten oder ionisch modifizierte Siloxane wie zum Beispiel ammoniumfunktionelle Siloxane. Dabei können die polaren Substanzen, insbesondere die ionischen Verbindungen, auch in die Beschichtungsmassen eingebracht werden, indem sie zunächst auf die Oberfläche von Partikeln aufgebracht werden.

Die aufgeführten Additive, die leicht durch Mikrowellen erwärmt werden können, stellen lediglich Beispiele und keine Einschränkung im Sinne dieser Erfindung dar.

Da die Beschichtungsmassen, gegebenenfalls unter Verwendung der aufgeführten mikrowellenanregbaren Additive, nach einer Bestrahlung mit Mikrowellen erwärmt werden, kann es sinnvoll sein, dem System einen anderen, als nach dem Stand der Technik üblichen, Katalysator bzw. Initiator zuzusetzen. Beim Einsatz radikalisch härtbarer siloxanhaltiger Beschichtungsmassen ist es beispielsweise sinnvoll, die üblichen Photoinitiatoren ganz oder teilweise durch thermisch aktivierbare Initiatoren zu ersetzen, wie zum Beispiel 2,2'-Azobisisobutyronitrile (AIBN), Benzoyl peroxide, Dilauroyl peroxide oder Dicumyl peroxide. Sinngemäß gilt dies auch für die anderen Systeme.

Bei der thermischen Härtung ist es gegebenenfalls sinnvoll, spezielle Übergangsmetall-Katalysatoren zu verwenden, deren Liganden durch Mikrowellen-Bestrahlung abgespalten oder substituiert werden. Derartige Übergangsmetall-Katalysatoren sollen thermisch jedoch eine ausreichende Stabilität aufweisen, um eine gute Handhabung der anwendungsfertigen Beschichtungsmasse zu gewährleisten.

### Beispiele

Zur Identifizierung von siloxanhaltigen Beschichtungsmassen, die sich durch Mikrowellen aushärten lassen, wurden zunächst Modellexperimente mit einer Mikrowelle der Marke CEM, Modell Discover, durchgeführt. Zur Austestung wurden jeweils 8 mL Probe einer silikonhaltigen Beschichtungsmasse in ein 10 mL-Glasröhrchen gefüllt und bestrahlt.

### Beispiel 1:

Es wurden 70 g Tego RC 902 (α,ω-modifiziertes Siliconacrylat, kommerziell erhältlich von der Degussa AG) mit 30 g Tego RC 711 (seitenständig hochmodifiziertes Siliconacrylat, kommerziell erhältlich von der Degussa AG) und 2 g AIBN gemischt. Anschließend wurden 8 mL dieser Mischung in ein 10 mL Glasröhrchen gefüllt und 2 Minuten mit einer Mikrowellenleistung von 200 W bestrahlt. Dabei wurde die Reaktionskammer mit Stickstoff inertisiert. Es zeigte sich, dass die Mischung vollständig aushärtete.

### Beispiel 2:

Es wurden 70 g Tego RC 902 (α,ω-modifiziertes Siliconacrylat, kommerziell erhältlich von der Degussa AG) mit 30 g Tego RC 711 (seitenständig hochmodifiziertes Siliconacrylat), 2 g Aerosil 200 (hydrophile pyrogene Kieselsäure, kommerziell erhältlich von der Degussa AG) und 2 g AIBN gemischt. Anschließend wurden 8 mL dieser Mischung in ein 10 mL Glasröhrchen gefüllt und 1 Minute mit einer Mikrowellenleistung von 200 W bestrahlt. Dabei wurde die Reaktionskammer mit Stickstoff inertisiert. Es zeigte sich, dass die Mischung vollständig aushärtete.

### Beispiel 3:

Es wurden 70 g Tego RC 902 (α,ω-modifiziertes Siliconacrylat, kommerziell erhältlich von der Degussa AG) mit 30 g Tego RC 711 (seitenständig hochmodifiziertes Siliconacrylat), 2 g Aerosil 200 (hydrophile pyrogene Kieselsäure, kommerziell erhältlich von der Degussa AG) und 2 g AIBN gemischt. Anschließend wurden 8 mL dieser Mischung in ein 10 mL Glasröhrchen gefüllt und 1 Minute mit einer Mikrowellenleistung von 200 W bestrahlt. Dabei wurde die Reaktionskammer nicht inertisiert. Es zeigte sich, dass die Mischung nur teilweise aushärtete.

### Beispiel 4:

Es wurden 100 g DEHESIVE 929 (Vinylsiloxan, kommerziell erhältlich von der Wacker AG) mit 7,19 g Crosslinker V 06 (SiH-funktionelles Siloxan, kommerziell erhältlich von der Wacker AG) und 1.07 g Catalyst OL (100 ppm Pt) gemischt. Anschließend wurden 8 mL dieser Mischung in ein 10 mL Glasröhrchen gefüllt mit einer Mikrowellenleistung von 300 W bestrahlt. Es zeigte sich, dass die Mischung erst nach einer Bestrahlungsdauer von 2 Minuten vollständig ausgehärtet war.

### Beispiel 5:

Es wurden 100 g DEHESIVE 929 (Vinylsiloxan) mit 7,19 g Crosslinker V 06 (SiH-funktionelles Siloxan), 1 g Dimethyldistearyl-ammonium-chlorid und 1.07 g Catalyst OL (100 ppm Pt) gemischt. Anschließend wurden 8 mL dieser Mischung in ein 10 mL Glasröhrchen gefüllt und mit einer Mikrowellenleistung von lediglich 100 W bestrahlt. Es zeigte sich, dass die Mischung bereits nach 1 Minute vollständig ausgehärtet war.

### Beispiel 6:

Es wurden 100 g RC 1402 (epoxymodifiziertes Siloxan, kommerziell erhältlich von der Degussa AG) mit 4 g Tego PC 1465 (50 %ige Lösung eines Iodoniumsalzes, kommerziell erhältlich von der Degussa AG) gemischt. Anschließend wurden 8 mL dieser Mischung in ein 10 mL Glasröhrchen gefüllt und 2 Minuten mit einer Mikrowellenleistung von 300 W bestrahlt. Es zeigte sich, dass die Mischung vollständig aushärtete.

### Beispiel 7:

Es wurden 95 g RC 1402 (Epoxy modifiziertes Siloxan) mit 5 g Polypropylenoxid (mittlere Molmasse 1000 g/mol) und 4 g Tego PC 1465 (50 %ige Lösung eines Iodoniumsalzes) gemischt. Anschließend wurden 8 mL dieser Mischung in ein 10 mL Glasröhrchen gefüllt und 2 Minuten mit einer Mikrowellenleistung von lediglich 150 W bestrahlt. Es zeigte sich, dass die Mischung vollständig aushärtete.

### Anwendungstechnische Überprüfung:

Zur Überprüfung der anwendungstechnischen Eigenschaften wurden die härtbaren Beschichtungsmassen, die in den oben genannten Beispielen aufgeführt sind, auf flächige Träger (orientierte Polypropylenfolie) aufgetragen, ein Bereich von 6 x 6 cm ausgeschnitten und in der oben beschriebenen Mikrowellenapparatur bestrahlt. Die Auftragsmenge beträgt in jedem Fall ca. 1 g/m².

Anschließend wurde der Trennwert dieser Beschichtungen bestimmt. Dazu wurde ein 25 mm breites Klebeband, welches mit einem Acrylatkleber beschichtet und als TESA^{®} 7475 im Handel von der Firma Beiersdorf erhältlich ist, verwendet. Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min unter einem Schälwinkel von 180° vom Untergrund abzuziehen. Diese Kraft wird als Trennkraft oder Trennwert bezeichnet. Die allgemeine Testprozedur entspricht im Wesentlichen der Testmethode Nr. 10 der "Fédération Internationale des Fabricants et Transformateurs D'Adhésifs et Thermocollants sur Papier et autres Supports" (FINAT).

Die Bestimmung der Restklebkraft erfolgt weitestgehend gemäß der FINAT Testvorschrift Nr. 11. Hierzu wird das Klebeband TESA^{®} 7475 der Firma Beiersdorf auf den Untergrund gewalzt und anschließend bei 40 °C unter einem Gewicht von 70 g/cm² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min unter einem Schälwinkel von 180 ° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben. Werte über 80 % gelten dem Fachmann als ausreichend und sprechen für eine gute Aushärtung.

| Beispiel | Trennwert TESA 7475 [cN/inch] | Restklebkraft [%] |
|---|---|---|
| 1 | 15 | 79 |
| 2 | 12 | 85 |
| 3 | 6 | 56 |
| 4 | 12 | 82 |
| 5 | 11 | 92 |
| 6 | 16 | 76 |
| 7 | 12 | 86 |

Die anwendungstechnische Prüfung zeigt, dass die Herstellung von siloxanhaltigen Trennbeschichtungen durch Bestrahlung mit Mikrowellen mit guten Eigenschaften möglich ist. Es zeigt sich auch, dass es von Vorteil sein kann, Additive in die Beschichtungsmasse einzubringen, welche leicht durch Mikrowellen erwärmt werden können (vergleichende Beispiele 1 und 2, 4 und 5, 6 und 7). Im Falle der radikalischen Mikrowellenhärtung ist, wie auch bei der UV Härtung, eine Inertsierung bei der Aushärtung vorteilhaft (vergleichende Beispiele 2 und 3).

## Patentansprüche

1. Verfahren zur Herstellung von siloxanhaltigen Trennbeschichtungen, **dadurch gekennzeichnet, dass** eine siloxanhaltige Beschichtungsmasse durch Bestrahlung mit Mikrowellen ausgehärtet wird.

2. Verfahren nach Anspruch 1, **dadurch gekennzeichnet, dass** die siloxanhaltigen Beschichtungsmassen eine oder mehrere thermisch härtende Verbindungen enthalten.

3. Verfahren nach Anspruch 2, **dadurch gekennzeichnet, dass** die siloxanhaltigen Beschichtungsmassen eine oder mehrere Verbindungen enthalten, ausgesucht aus der Gruppe der vinylfunktionellen Siloxane und SiH-Gruppen enthaltenden Siloxane.

4. Verfahren nach Anspruch 1, **dadurch gekennzeichnet, dass** die siloxanhaltigen Beschichtungsmassen eine oder mehrere radikalisch härtende Verbindungen enthalten.

5. Verfahren nach Anspruch 4, **dadurch gekennzeichnet, dass** die siloxanhaltigen Beschichtungsmassen eine oder mehrere (meth)acrylat-funktionelle Siloxane enthalten.

6. Verfahren nach Anspruch 1, **dadurch gekennzeichnet, dass** die siloxanhaltigen Beschichtungsmassen eine oder mehrere kationisch härtende Verbindungen enthalten.

7. Verfahren nach Anspruch 6, **dadurch gekennzeichnet, dass** die siloxanhaltigen Beschichtungsmassen eine oder mehrere epoxy-funktionelle Siloxane enthalten.

8. Verfahren nach Anspruch 1 bis 7, **dadurch gekennzeichnet, dass** die Beschichtungsmassen ein oder mehrere organische und/oder ein oder mehrere anorganische Partikel mit polaren Oberflächen enthalten.

9. Verfahren nach Anspruch 8, **dadurch gekennzeichnet, dass** als Partikel Kieselsäure verwendet wird.

10. Verfahren nach Anspruch 1 bis 9, **dadurch gekennzeichnet, dass** die Beschichtungsmassen eine oder mehrere ionische Verbindungen enthalten.

11. Verfahren nach Anspruch 10, **dadurch gekennzeichnet, dass** als ionische Verbindungen ionische Flüssigkeiten verwendet werden.

12. Verfahren nach Anspruch 10, **dadurch gekennzeichnet, dass** als ionische Verbindungen ionisch modifizierte Siloxane verwendet werden.

13. Verfahren nach Anspruch 12, **dadurch gekennzeichnet, dass** als ionische Verbindungen quaternäre ammoniummodifizierte Siloxane verwendet werden.
